# EUROPEAN PATENT APPLICATION

(11) **EP 2 311 714 A1**
(43) Date of publication of application: **20.04.2011**
(21) Application number: 10187576.3
(22) Date of filing: 14.10.2010
(51) Int. Cl.: B62D 65/12

(54) **Apparatus and method for automatically tightening the wheel fastening bolts of motor vehicles**

(30) Priority: 15.10.2009 IT TO20090783
(71) Applicant: Mapor Caldart S.p.A., 10099 San Mauro Torinese (Torino) (IT)
(72) Inventor: Trucco, Marco, 10128 Torino (IT)
(74) Representative: Fioravanti, Corrado

(57) **Abstract**

The apparatus comprises two units which are movable parallel to a skid conveyor: a device (20) for detecting the position of a skid (S) or a motor vehicle and an assembly (40) comprised of a digital camera (32) and a bolt driver (47). The detecting device (20) includes a hooking means (23) which is temporarily connectable to a skid so as to be pulled by it. The hooking means is connected to an encoder (26) providing progression signals representing the longitudinal position of the skid (S). The assembly (40) includes a longitudinally movable carriage (43) carrying the camera (32) and the bolt driver (47). The bolt driver is actuated in controlled manner so as to accomplish movements in a vertical direction, in a horizontal direction transverse to the longitudinal direction of advancement, and a rotation about this transverse direction.

## Description

The present invention relates to a method and apparatus for automatically tightening the wheel fastening bolts of motor vehicles.

As is well known, in many modern production lines, each car under construction stands on its own skid, which moves on a chain or slat conveyor, also called the skid conveyor. In other applications, the cars are moved by an overhead chain conveyor. The wheels to be mounted on the motor vehicle are placed on the hub by hand and the bolts are applied and finger tightened to keep the wheel on the hub. Final tightening, to the predetermined tightening torque, is done at a subsequent workstation. Even this latter operation has hitherto been done by hand, using a pneumatic gun with four or five bolt driver heads.

In order to achieve advantages in terms of time and a reduction in labour costs, the present invention provides for the automatic tightening of the wheel fastening bolts to the predetermined tightening torque. To achieve these and other objects and advantages, which will be understood more fully from the remainder of the text, the invention provides a bolt tightening apparatus and method having the features and steps defined in the appended claims.

A preferred but non-restrictive embodiment of the invention will now be described; the appended drawings will be referred to, in which:
- Figure 1 is a perspective and diagrammatic view of an apparatus according to the invention, in which certain parts have been omitted in order to show more clearly the distinguishing features of the present invention;

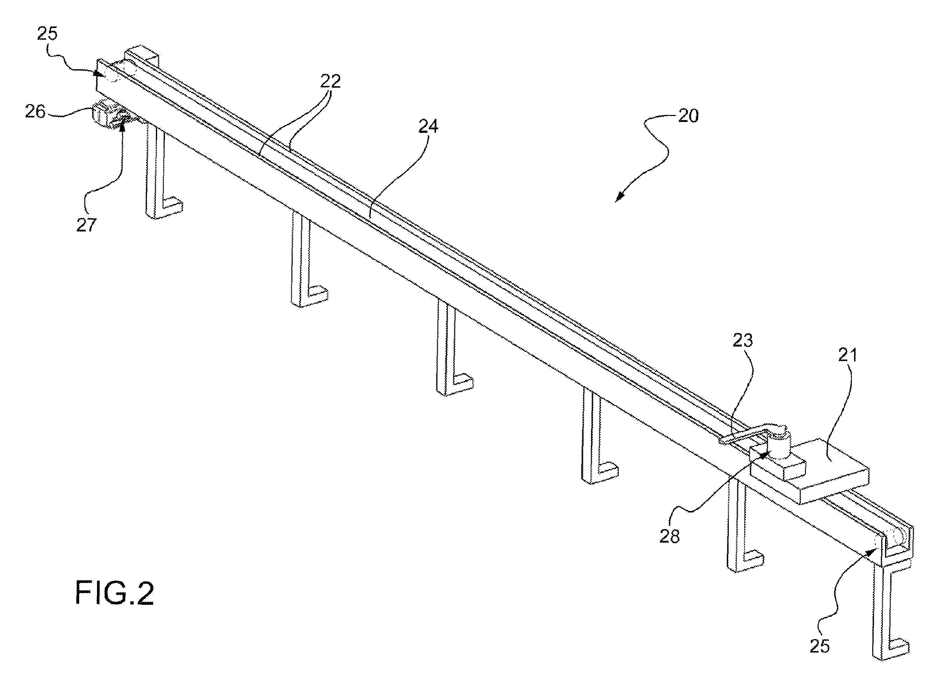

- Figure 2 is a perspective view showing diagrammatically a device forming part of the apparatus from Figure 1;
- Figure 3 is a perspective view showing diagrammatically a movable assembly forming part of the apparatus from Figure 1;
- Figure 4 is a perspective view, from a different angle, of the assembly seen in Figure 3; and
- Figure 5 is a perspective and diagrammatic view of an apparatus according to the invention, similar to the one of Figure 1, but associated with an overhead chain conveyor.

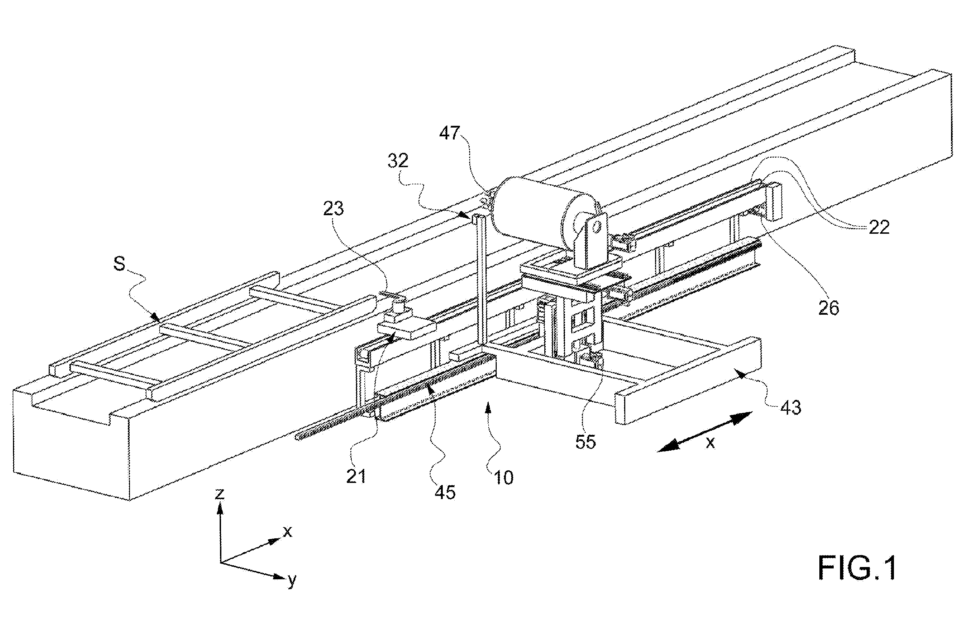

Referring initially to Figure 1, installed alongside each of the two sides of a skid conveyor is a respective apparatus according to the present invention, one for tightening of the wheel bolts on the right-hand side of the cars, and the other for those on the left. Each car is carried on its own skid, indicated diagrammatically at S. In Figure 1, for illustrative purposes, only one of the two apparatuses is shown, its general reference being 10. The two apparatuses, one on the left and the other on the right, have symmetrical structures with respect to the conveyor. The description that follows will therefore be made almost exclusively with reference to one of the two symmetrical apparatuses, it being understood that the part not described shall be assumed to be identical or substantially identical to that described.

The features of the conveyors and skids carrying the cars under construction will be assumed to be largely familiar. Consequently, the remainder of the description will describe in detail only those elements that are of specific significance and interest for the purposes of implementing the present invention. To construct parts and elements not illustrated in detail, one may refer to any car assembly plant.

Each apparatus of the present invention essentially consists of two associated devices, both located on the same side of the conveyor:
- a movable device 20 for detecting in real time the longitudinal position or position of advancement of a skid, and
- a movable assembly 40 comprising a bolt tightening robot 41 and a camera (still or video) 32 capable of capturing an image of the wheel pre-assembled on the hub and ready for its bolts to be tightened.

The detecting device 20 comprises a plate-like runner or cursor 21 mounted on two longitudinal guides 22 that run parallel to the conveyor for a predetermined distance, to enable the cursor 21 to accompany the movement of the car while the robot 41 is tightening the wheel fastening bolts, as explained in more detail below. Mounted on the cursor 21 is a hooking means, in this example a rod 23 projecting transversally into the path of the skids. When a car comes along, the skid carrying it hooks onto the rod 23 and pulls the cursor 21 with it. Attached to this cursor is a belt 24 arranged in a closed loop around two pulleys or rollers 25 with transversal axes, separated longitudinally alongside the conveyor. One of the pulleys 25 is operatively connected to an absolute angular encoder 26, by which the movement of the skid in the direction of advancement, here termed the longitudinal direction, is detected by the encoder and supplied to a processing unit - typically a PLC or Programmable Logic Controller or a PC (Personal Computer) - which supervises the operation of the apparatus as a whole, and therefore also supervises the operation of all the other motor/actuator members and encoders described hereinbelow.

To enable the rod 23 to be disengaged from the skid at the end of the bolt tightening cycle, the rod 23 is mounted in articulated manner and can be rotated by an actuator 28 to an external position in which it does not interfere with the path of the skid, which carries on along the conveyor. To return the cursor 21 in the opposite direction to the direction of advancement, a geared motor 27 connected to the pulley 25 is used.

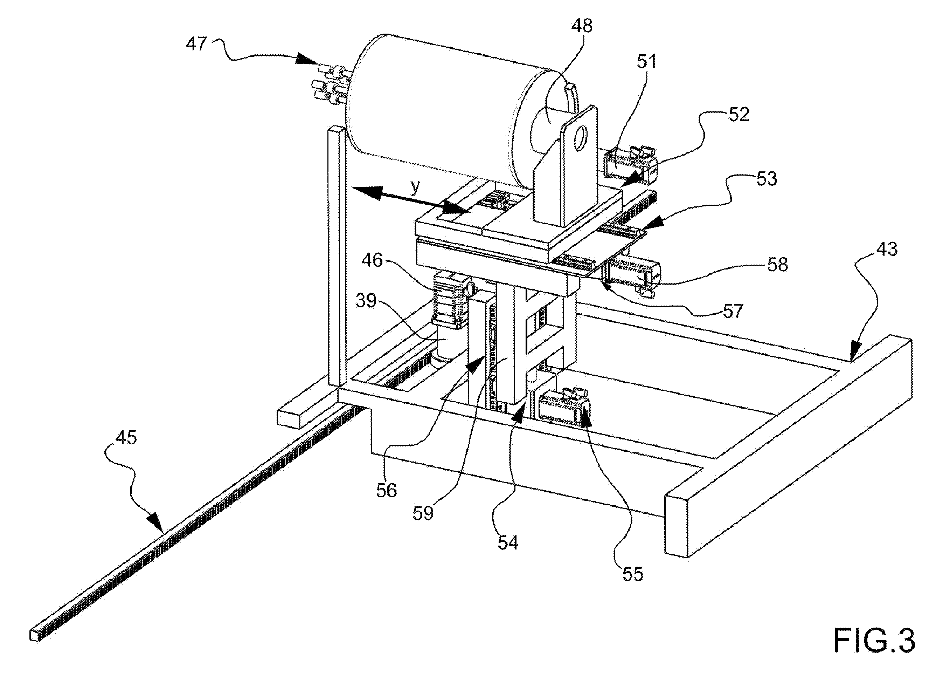

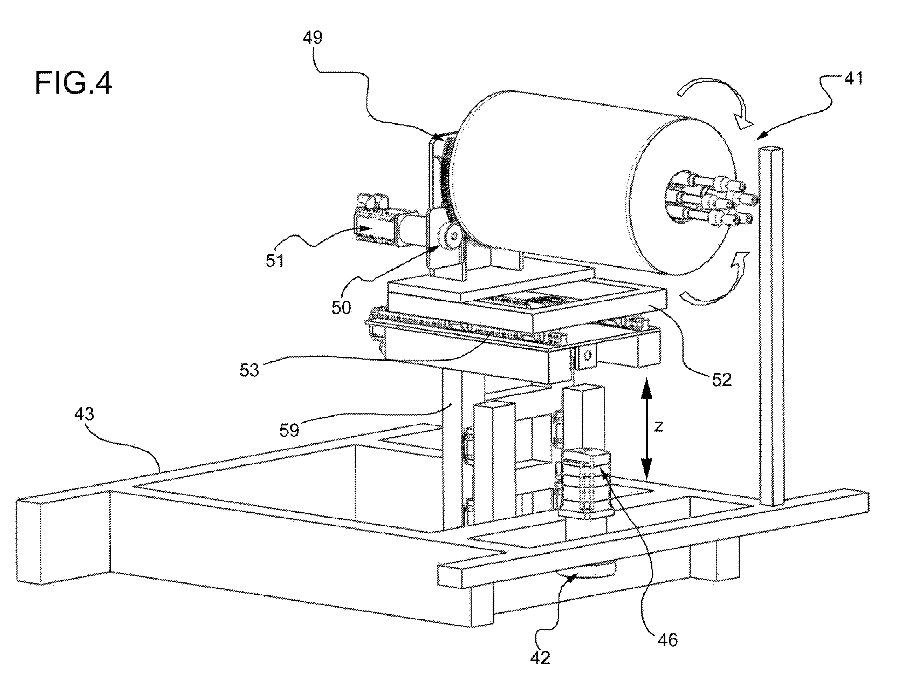

The movable assembly 40 carrying the bolt tightening robot 41 translates longitudinally, advancing parallel to and alongside the skid, by means of a supporting carriage 43 provided with a gear 42 driven by an electric motor 39 (Figure 4). The gear 42 meshes with a straight longitudinal fixed rack 45 (Figure 3). The longitudinal movement of the carriage 43, along the axis here termed x of a Cartesian coordinate system xyz having planes xy, xz and yz, is controlled by a first absolute encoder 46 coupled with the gear 42.

The bolt tightening robot 41 comprises a multiple pneumatic bolt driver 47, of a type known per se, having four or five bolt driver heads, depending on the number of bolts to be tightened on each wheel. The bolt driver 47 is orientated in such a way that its bolt driver heads point in directions parallel to the horizontal transversal axis y of the Cartesian coordinate system xyz. The bolt driver 47 is rotatable as a whole about a central transversal axis parallel to the axis y and defined by a rotatable support 48. A motorized pinion 50 (Figure 4) meshes with a gear 49 connected to the body of the bolt driver 47 to orientate circumferentially the bolt driver heads in such a way as to align them transversally with the wheel bolts. The angular position of the bolt driver 47 with respect to the transversal axis y is monitored by a second encoder 51.

The system comprising the bolt driver 47, its support 48, the gear 49, the pinion 50, and an epicyclic geared motor (not shown in detail) for its actuation, is mounted on a slide 52 that travels along guides 53 parallel to the axis y and driven in this direction by a linear actuator 57, preferably of the type having a ball bushing (not shown) and/or other equivalent linear actuators to move the bolt driver 47 towards (and then away from) the vehicle wheel. A third absolute encoder 58 monitors the linear movement of the bolt driver 47 along the y axis.

The transversal guides 53 and the whole system travelling along the y axis are mounted on a frame 59 supported in such a way as to be vertically adjustable on vertical guides 56 by a jack 54 carried by the supporting carriage 43. A fourth linear encoder 55 monitors the vertical movements imparted by the jack 54.

Operation of apparatus 10 is as follows. At the start of the cycle, the movable detecting device 20 and the movable bolt tightening assembly 40 are in a longitudinally backward position (or "zero" first position), when encountered by a skid S carrying a car with wheels placed provisionally on its hubs. The skid hooks the carriage 21 by means of the rod 23 and carries it with it, thus causing the belt 24 to move. The carriage 43 with the movable assembly 40 is also positioned close to the point at which the front wheel (which in the example illustrated is the front right wheel) arrives. The encoder 26 sends a first or start signal, which is received by the processing unit and converted into an activation command for the camera 32, which captures a digital image of the front (right) wheel. Next, the encoder 26 sends the processing unit a series of progression signals representing the real-time position of the skid S on the longitudinal axis x.

The same operations are being carried out on the left-hand side of the car, by means of apparatuses identical to those illustrated.

The image of the wheel is sent to the processing unit which extracts, in a manner known *per se,* a series of coordinate data representing the relative positions of the bolts to be tightened with respect to a predetermined two-dimensional coordinate system parallel to the plane xz and associated with the vehicle, where z is the vertical axis of the Cartesian coordinate system xyz.

The relative positions of the bolts represent the orientation which the group of wheel bolts has with respect to said two-dimensional coordinate system, because the mutual positions of the bolts are fixed.

At this point the processing unit processes, in a manner known *per se,* the coordinate data and the progression signals in such a way as to obtain position data representing the absolute final position of the bolts which the bolt driver heads must achieve.

The processing unit therefore sends control signals to the actuators which regulate the vertical (z) and longitudinal (x) movements of the bolt driver 47. Said control signals activate the electric motor 39 and the actuator 54, which move the central axis of the bolt driver 47 until it is axially aligned with the axis of rotation of the wheel of the car (alignment in y).

Simultaneously or immediately afterwards, the driven pinion 50 is also rotated until the bolt driver heads are in the final position calculated by the processing unit, thereby aligning them parallel to the y axis with the respective bolts. Once in this position, the linear actuator 57 which regulates the approach along the y axis is extended. The bolt driver heads thus engage with the bolts and tighten them to the predetermined tightening torque.

After tightening, the bolt driver head is moved back along the y axis. The rod 23 is rotated to a position of disengagement from the skid, and the geared motor 27 of the detecting device 20 is activated to return the carriage 21 quickly to a second backward position (or second "zero" position) to wait for the rear wheel. Simultaneously the movable assembly 40 is also returned to a position close to or level with the second zero position. Advantageously, the second zero position, for the rear wheel, is slightly further forward then that for the front wheel, to allow a return, not necessarily very fast, of the carriages. The sequence of operations described above is then repeated in exactly the same way so as also to detect the positions of the bolts of the rear wheel and activate accordingly the actuators in x, y, z and about the y axis.

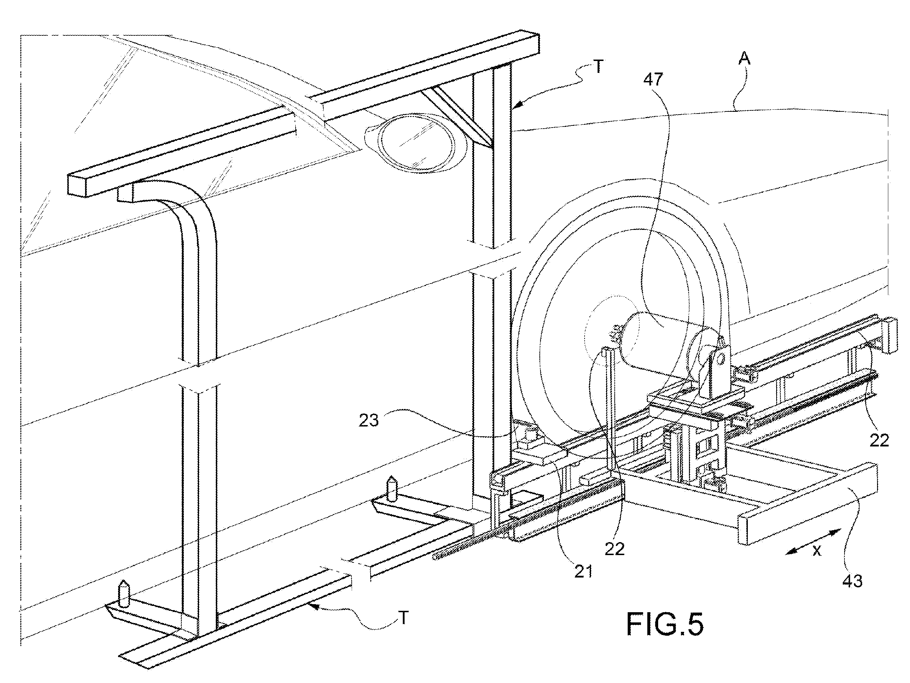

Figure 5 shows an embodiment of an apparatus according to the invention associated with an overhead chain conveyor, known per se, in which the motor vehicles A are moved by trolleys T. The rod 23 of the cursor 21 projects transversally into the path of the trolleys T, similarly as shown in Figure 1 in connection with the skids S. It will be understood that the invention may be equally implemented with other kinds of conveyors for moving the motor vehicles.

The principle underlying the invention remaining the same, the details of construction may depart from those described and illustrated without thereby departing from the scope of the invention, as defined by the appended claims. For example, in other embodiments of the invention the coupling between the skid (or the trolley or car itself) and the detecting device in the longitudinal direction x may be effected by other means than the hooking means represented by the rod 23. As an example, magnetic coupling means may be used.

## Claims

1. Apparatus for automatically tightening the wheel fastening bolts of a motor vehicle advancing in a longitudinal direction (x) of a predetermined Cartesian coordinate system (xyz) on a skid (S) conveyor or on a trolley (T) of an overhead chain conveyor, the apparatus comprising in combination:
- a device (20) for detecting the position of a skid (S) or a trolley (T) or a motor vehicle (A) along the direction of advancement (x), with
- a releasable mechanical coupling means (23), temporarily connectable to a skid (S) or a trolley (T) or a motor vehicle (A), and movable parallel to the direction of advancement along with the motor vehicle for a predetermined length aside the conveyor, and
- a transducer means (26) operatively connected to the mechanical coupling means (23), providing progression signals indicative of the longitudinal position of the skid (S) or the trolley (T) or the motor vehicle (A) in said length,
- an assembly (40) movable parallel to the direction of advancement (x) with the motor vehicle for a predetermined length alongside the conveyor, the assembly comprising:
a longitudinally movable support (43), provided with first guiding means and first driving means for moving the support (43) in a controlled manner along the longitudinal direction (x),
a digital camera (32), mounted on the support (43), for capturing at least one image of the motor vehicle wheel fastening bolts,
a vertically movable frame (59), mounted on the longitudinally movable support (43), coupled with second guiding means (56) and second driving means (54) for moving the frame (59) in a controlled manner along the vertical direction (z) of said Cartesian coordinate system (xyz),
a transversally movable slide (52), mounted on the vertically movable frame (59), coupled with third guiding means (53) and third driving means (57) for moving the slide (52) in a controlled manner along a transversal, horizontal direction (y) of said Cartesian coordinate system (xyz),
a bolt driver device (47) having a plurality of bolt driver heads, rotatably supported by the slide (52) about a central axis substantially parallel to the transversal direction (y) and coupled with fourth driving means (49, 50) for rotating the bolt driver device about this central axis;
- control and processing means arranged for:
- receiving said image of the bolts from the camera (32),
- calculating, based on said image of the bolts, coordinate data representative of the relative position of the bolts of the wheels with respect to a predetermined two-dimensional coordinate system parallel to the plane xz of the Cartesian coordinate system (xyz);
- receiving the progression signals from the transducer means (26),
- calculating, based on the coordinate data and the progression signals, position data representative of the absolute position of the bolts to be tightened,
- sending, based on the position data obtained, first control signals to the first and second driving means so as to bring the central axis of the bolt driver device (47) in alignment with the rotation axis of the vehicle wheel,
- sending second control signals to the fourth driving means so as to rotate the bolt driver device (47) about the central axis in order to align the bolt driver heads with the wheel fastening bolts; and
- sending third control signals to the third driving means (57) for causing the slide (52) to translate in the transversal direction (y), bringing the bolt driver heads into engagement with the wheel bolts.

2. Apparatus according to claim 1, wherein:
- the detecting device (20) comprises a cursor (21) slidably mounted along one or more longitudinal guides (22) running parallel to the conveyor for a predetermined length,
- the cursor (21) carries the releasable mechanical coupling means (23), and
- the transducer means (26) in an absolute angular encoder operatively connected to a pulley (25) driven for rotation by a flexible transmission means (24) bound to the cursor (21).

3. Apparatus according to claim 1, wherein the flexible transmission means is a belt (24) arranged in a closed loop around two pulleys (25) with longitudinally spaced apart axes located alongside the conveyor.

4. Apparatus according to claim 3, wherein at least one of the two pulleys (25) is coupled with a motor means (27) for causing a return motion of the cursor (21) in a direction opposite to the direction of advancement of the skids or trolleys.

5. Apparatus according to any one of the preceding claims, wherein the releasable mechanical coupling means (23) is a hooking means.

6. Apparatus according to claim 5, wherein the hooking means (23) is mounted in articulated manner and associated with an actuator (28) for moving the hooking means (23) in a passive position where it does not interfere with the path of the skids or trolleys or motor vehicles.

7. Apparatus according to claim 1, wherein each of said driving means is associated with a relevant encoder.

8. A method of automatically tightening the wheel fastening bolts of a motor vehicle advancing in a longitudinal direction (x) of a predetermined Cartesian coordinate system (xyz) on a skid conveyor or on a trolley (T) of an overhead chain conveyor, the method comprising the steps of:
a) providing an apparatus according to any one of the preceding claims;
b) placing the coupling means (23) and the movable support (43) in longitudinally backward positions;
c) coupling, by means of the coupling means (23), a skid (S) or trolley (T) or motor vehicle (A) with the position detecting device (20) and simultaneously generating a start signal by means of the transducer means (26);
d) generating, following the start signal, an activation signal for activating the camera (32) and capturing, by means of the camera, at least one digital image of the fastening bolts of a front wheel of a motor vehicle advancing with the said skid;
e) sending to said control and processing means the digital image and the progression signals generated by the transducer means (26) and which are representative of the real time position of the skid (S) or trolleys (T) or motor vehicles (A) in the longitudinal direction;
f) calculating, starting from said image of the bolts, coordinate data representative of the relative positions of the fastening bolts of the front wheel with respect to a predetermined two-dimensional coordinate system parallel to the xz plane of the Cartesian coordinate system (xyz);
g) calculating, based on the coordinate data and the progression signals, position data representative of the absolute position of the bolts to be tightened;
h) based on the position data obtained, sending first control signals to the first and second driving means so as to bring the central axis of the bolt driver device (47) into alignment with the rotation axis of the said front wheel of the motor vehicle;
i) sending second control signals to the fourth driving means so as to rotate the bolt driver device (47) about the central axis so as to bring the bolt driver heads into alignment with the wheel bolts;
j) sending third control signals to the third driving means (57) causing the slide (52) to translate in the transversal direction (y), bringing the bolt driver heads into engagement with the bolts,
k) tightening the bolts according to a preset tightening torque by means of the bolt driver device (47).

9. The method of claim 8, further comprising the steps of:
- upon completion of the tightening of the bolts, inverting the motion of the third driving means, causing the bolt driver device (47) to move transversally away from the vehicle wheel;
- bringing the movable support (43) back into a longitudinally backward position;
- capturing, by means of the camera (32), at least one digital image of the fastening bolts of a rear wheel of the said motor vehicle; and
- repeating steps e) to k) in connection with the rear wheel.
